**Europäisches Patentamt**

**European Patent Office**

**Office européen des brevets**

(11) Veröffentlichungsnummer: **0 212 388**
A2

# (12) EUROPÄISCHE PATENTANMELDUNG

(21) Anmeldenummer: **86110636.7**

(22) Anmeldetag: **01.08.86**

(51) Int. Cl.⁴: **B 23 B 31/26**, B 23 Q 5/20

(30) Priorität: **14.08.85 DE 3529181**

(43) Veröffentlichungstag der Anmeldung: **04.03.87**
**Patentblatt 87/10**

(84) Benannte Vertragsstaaten: **CH DE FR GB IT LI**

(71) Anmelder: **MAHO WERKZEUGMASCHINENBAU BABEL & CO., Postfach 1280, D-8962 Pfronten/Allgäu (DE)**

(72) Erfinder: **Babel, Werner, Achweg 19, D-8962 Pfronten-Meilingen (DE)**

(74) Vertreter: **Patentanwälte Beetz sen. - Beetz jun. Timpe - Siegfried - Schmitt-Fumian, Steinsdorfstrasse 10, D-8000 München 22 (DE)**

(54) **Spannvorrichtung für Werkzeuge.**

(57) Gegenstand der Erfindung ist eine Vorrichtung zum Einspannen von Werkzeugen in der Spindel (1) einer Werkzeugmaschine, die eine zentral in der Spindel angeordnete Spannzange (6) mit Greifbacken (7) am vorderen Ende, ein Federpaket (30) zur Erzeugung der notwendigen Schließkraft und einen die Schließkraft überwindenden Mechanismus zum Öffnen der Spannzange (6) aufweist. Um eine Druckmittelzufuhr in die Spindel zu vermeiden und die Spindel zum Werkzeugwechsel auf einfache Weise orientieren zu können, ist der Mechanismus (40) seitlich neben der Spindel (1) im Spindelstock (3) angeordnet und greift außen an der Spannzange (6) und an einen Außenring (35) der Spindel (1) an. Zur Spindelorientierung weist der Außenring (35) zwei Kerben für den Eingriff zweier Nasen auf.

0212388

MAHO Werkzeugmaschinenbau Babel & Co.
D-8962 Pfronten
------------------------------------------------

Spannvorrichtung für Werkzeuge

Die Erfindung betrifft eine Vorrichtung zum Einspannen von Werkzeugen in der Spindel einer Werkzeugmaschine, bestehend aus einer zentral in der Spindel
angeordneten Spannzange mit Greifbacken am vorderen
Ende, aus einem in der Spindel angeordneten Federpaket
und aus einem die Kraft des Federpakets überwindenden
Mechanismus zum Öffnen der Spannzange.

Zum Einspannen von Werkzeugen bzw. ihrer Spannkegel in den Spindeln von z. B. Fräs- und Bohrmaschinen werden Vorrichtungen verwendet, deren Einzelteile
direkt in die Spindel eingebaut sind und mit dieser
mitlaufen. In einer zentralen Längsbohrung der Spindel
ist axial verschiebbar eine sog. Spannzange angeordnet,
die an ihrem freien Ende Greiferklauen zum Erfassen der
Werkzeugaufnahme trägt. Die radial vorstehenden Außenflächen der Greiferklauen sind schräg und wirken mit
Konusflächen in der Spindel zusammen. Durch eine Längs-

112-(x2317)-Sd-E

bewegung der Spannzange werden die Greiferklauen zugestellt oder gespreizt, um die in die Kegelöffnung der Spindel eingeführte Werkzeugaufnahme (ISO-Kegel) festzuklemmen oder freizugeben. Zum Erhalt der Zustellbewegung und der notwendigen relativ hohen Klemmkräfte ist um die Spannzange im Inneren der Spindel ein Federpaket angeordnet, das auf ein am Schaft der Spannzange befestigtes Druckstück einwirkt und auf die Spannzange ständig eine in Schließrichtung der Greiferklauen wirkende Kraft ausübt. Zum Aufspreizen der Greiferklauen zwecks Freigabe des Werkzeugs dient eine am Ende der Spannzange in der Spindelbohrung angeordnete hydraulische Kolben-Zylinder-Einheit, deren Kolben bei Beaufschlagung mit Druckflüssigkeit die Spannzange gegen die Kraft des Federpakets axial in der Spindelbohrung verschiebt und dabei die unter radialer Vorspannung stehenden Greifklauen spreizt. Nachteilig bei dieser Art von Spannvorrichtungen sind u. a. die technisch aufwendige Zu- und Ableitung der Druckflüssigkeit zu und von der mit der Spindel umlaufenden Kolben-Zylinder-Einheit, die durch diese bedingte Baulänge der Spindel, die Belastungen der Spindellager beim Betätigen der Spannzange und schließlich die Notwendigkeit einer zusätzlichen Vorrichtung für die genaue Spindelorientierung und -festlegung in der für den automatischen Werkzeugwechsel notwendigen Winkelstellung.

Aufgabe der Erfindung ist es, eine Spannvorrichtung für Werkzeuge zu schaffen, die die o. g. Nachteile bekannter Ausführungen nicht aufweist und die eine Vereinfachung der gesamten Spindelkonstruktion ermöglicht.

Diese Aufgabe wird erfindungsgemäß dadurch gelöst, daß der Mechanismus zum Aufspreizen der Greiferklauen und damit Freigeben des Werkzeugs neben der Spindel im Spindelstock angeordnet ist und einerseits an einem aus der Spindel herausragenden Teil des Druckstücks und zum anderen an der Spindel angreift.

Durch die Erfindung wird erreicht, daß die Druckflüssigkeit nicht mehr der mitlaufenden Kolben-Zylinder-Einheit zugeführt werden muß, so daß Dichtungsprobleme praktisch nicht mehr auftreten können. Durch den gemeinsamen Angriff am Druckstück und an der Spindel ergibt sich beim Werkzeugwechsel ein in sich geschlossenes Kraftsystem ohne Axialbelastung der Spindellager, die somit einfacher ausgelegt bzw. kleiner dimensioniert werden können. Da der Mechanismus außerhalb der Spindel an einer günstigen Stelle im Spindelstock montiert ist, kann er neben der Erzeugung der Spreizbewegung der Greiferklauen auch noch die Funktion der genauen Spindelorientierung zum automatischen Werkzeugwechsel erfüllen, wozu bisher eine gesonderte konstruktiv aufwendige Einrichtung notwendig war.

Vorteilhafte Ausgestaltungen der Erfindung sind Gegenstand von Unteransprüchen.

Im folgenden wird ein Ausführungsbeispiel der Erfindung anhand der Zeichnung im einzelnen beschrieben. Es zeigen:

Fig. 1        eine Spindel im Axialschnitt;

Fig. 2a-c      verschiedene Betätigungsstellungen der erfindungsgemäßen Vorrichtung.

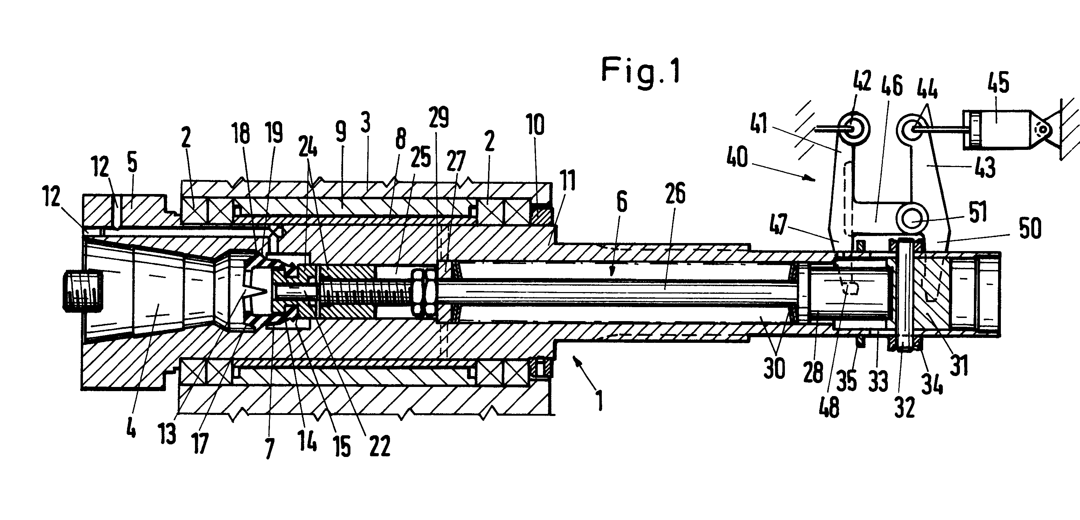

Die in Fig. 1 dargestellte Spindel 1 ist in Lagern 2 in einem Spindelstock 3 gelagert und wird von einem - nicht dargestellten - Motor angetrieben. In eine kegelförmige Ausnehmung 4 im vorstehenden Spindelkopf 5 wird das jeweilige Werkzeug eingesetzt und mittels einer Spannzange 6 gesichert, deren Greifklauen 7 die Spannmutter des Werkzeugkegels umgreifen. Zwischen den beiden Lagerpaaren 2 sind eine äußere Distanzbuchse 9 und eine innere Hülse 8 angeordnet, die die Spindel 6 im verdickten Mittelteil umgeben. Die Lagerkonstruktion wird durch einen Ring 10 gesichert, der auf dem Ende des verdickten Mittelteils 11 der Spindel 1 aufgeschraubt ist. Im Spindelkopf 5 sind Kanäle 12 vorgesehen, die von außen in den Aufnahmeraum 13 der Greifklauen 7 führen.

In einer zentralen Längsbohrung 25 der Spindel 1 ist die Spannzange 6 längsverschiebbar angeordnet. Die Greifklauen 7 der Spannzange 6 sind mit ihrem hinteren balligen Ende 14 in einer Nut 15 eines mehrteiligen Kopfstücks schwenkbar gelagert. An ihrem vorderen Teil weisen die Greifklauen 7 schräge Außenflächen 17 auf, die in der dargestellten Lage mit einem Ringbund 19 an der Umfangsfläche des Aufnahmeraumes 13 zur Erzeugung der Öffnungs- bzw. Schließbewegung der Greifklauen 7 bei einer Längsverschiebung der Spannzange 6 zusammenwirken. Der zylindrische Zangenkopf 24
ist in einer zentralen Längsbohrung 25 der Spindel 1
geführt und am vorderen Ende 22 eines Schaftes 26 befestigt. Der Schaft 26 erstreckt sich in der Spindelachse durch die Bohrung einer Druckscheibe 27 und ist
mit seinem hinteren Ende an einem zylindrischen Führungsglied 28 fest verbunden. Zwischen der an einer Ringschulter 29 in der
Längsbohrung 25 abgestützten Druckscheibe 27 und dem
Führungsglied 28 ist ein Tellerfederpaket 30 angeordnet, das die Schließkraft der Spannzange 6 erzeugt.
Das Führungsglied 28 ist mit seinem hinteren Ende an
einem zylindrischen Druckstück 31 befestigt, das begrenzt längsverschiebbar und drehfest im hinteren
hohlen Endteil der Spindel 1 angeordnet ist. Ein
radial im Druckstück 31 sitzender Bolzen 32 durchragt
mit seinen beiden Enden je ein längsgerichtetes Langloch 33 in der Spindel 1 und dient zur Befestigung
und Führung eines Druckrings 34, der im Gleitsitz auf
der Spindel 1 sitzt. Unmittelbar vor den beiden diametral gegenüberliegend angeordneten Langlöchern 33 ist
außen auf der Spindel 1 ein Außenring 35 befestigt.

Die Vorrichtung zum Öffnen der Spannzange 6 und
zum genauen Fixieren der Spindel 1 in der für den Werkzeugwechsel geeigneten Winkellage enthält eine quer
zur Spindel angeordnete Zange 40, die mit einem ihrer
Betätigungshebel 41 seitlich neben der Spindel 1 im Spindelstock 3 über ein Gelenk 42 aufgehängt ist. Am Ende des anderen Betätigungshebels 43 greift die Stange 44 einer Kolben-Zylinder-Einheit 45 an, deren Zylinder gelenkig im Spindelstock 3 festgelegt ist. Der erste Betätigungshebel 41 ist einstückig mit einem Mittelsteg 46 und einem Bügel 47 ausgeführt, welcher die Spindel 1 außen mit Abstand umgreift und an seinen beiden Enden feinbearbeitete Nasen 48 aufweist. Diese Nasen 48 greifen mit ihren seitlichen Schrägflächen in je einen stirnseitigen Ausschnitt 49 im Außenring 35 ein, um die stillgesetzte und vorausgerichtete Spindel 1 unmittelbar vor jedem Werkzeugwechsel genau auszurichten und während des Werkzeugwechsels gegen Verdrehung zu sichern.

Der aus dem zweiten Betätigungshebel 43 und einem die Spindel 1 umgreifenden Druckbügel 50 gebildete Zangenteil ist über ein Gelenk 51 am Ende des Mittelstegs 46 schwenkbar mit dem ersten Zangenteil 41, 47 verbunden. An den beiden Enden des Druckbügels 50 sind Nasen 52 ausgebildet, deren Ballenfläche gegen die hintere Stirnfläche des Druckringes 34 beim Betätigen der Spannzange 6 andrückt.

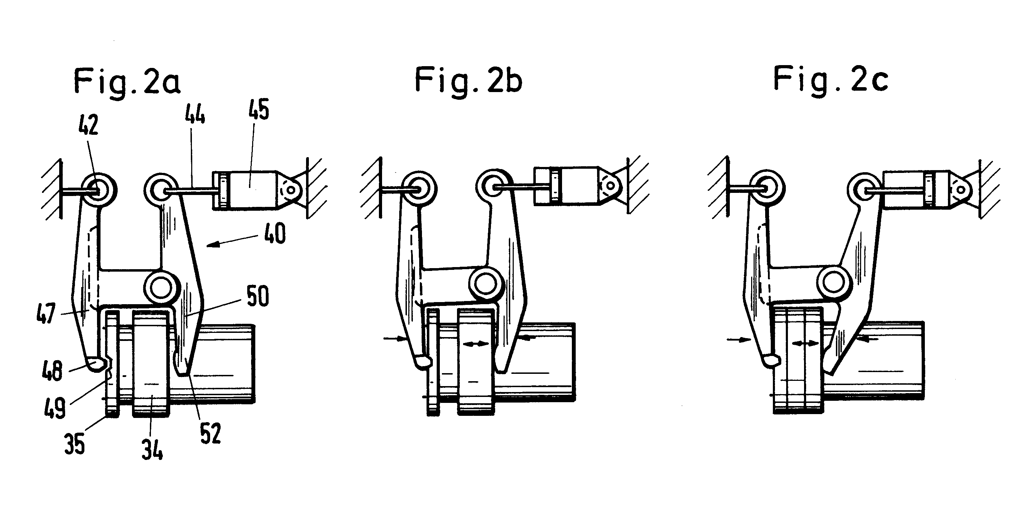

Die Funktion der erfindungsgemäß ausgebildeten Vorrichtung wird im folgenden anhand der Fig. 2a-c beschrieben.

In der in Fig. 2a gezeigten Grundstellung befindet sich die Spannzange 6 unter der Wirkung des Tellerfederpakets 30 in ihrer geschlossenen Stellung, in welcher ein Werkzeug in der kegelförmigen Ausnehmung 4 im Spindelkopf 5 festgespannt ist. Wie ersichtlich, ist die Zange 40 geöffnet und die Nasen 48 sind mit den diametral gegenüberliegenden Ausschnitten 49 außer Eingriff, so daß die Spindel 1 drehen kann. Zum Ein- und Ausbau, d. h. zum Wechseln, eines Werkzeuges wird die Spindel 1 im Langsamlauf in eine der festgelegten Wechsellage nahe Winkelstellung gebracht, in welcher die beiden Ausschnitte 49 im Außenring 35 den Nasen 48 gegenüberliegen (vgl. Fig. 2a). Durch Beaufschlagen der Kolben-Zylinder-Einheit 45 mit einem Druckmittel ergibt sich eine Zwischenstellung gemäß Fig. 2b, in der die Nasen 52 an den beiden Enden des Bügels 50 an dem Druckring 34 anliegen und die Nasen 48 in die Ausschnitte 49 eingreifen. Dieser Eingriff führt ggf. zu einer geringfügigen Verdrehbewegung der Spindel und zu ihrer genauen Fixierung in der Wechselstellung. Bei einer weiteren Beaufschlagung der Kolben-Zylinder-Einheit 45 werden durch die beiden Bügel 47 und 50 der Zange 40 der Druckring 34 und der auf der Spindel 1 befestigte Außenring 35 bis zu der in Fig. 2c gezeigten gegenseitigen Anlage aufeinanderzubewegt, was durch die hängende Anlenkung der Zange 40 im Spindelstock ermöglicht wird. Diese Bewegung erfolgt unter Überwindung der Kraft des Tellerfederpaketes 30 und führt zu einer relativen Längsverschiebung der Spannzange 6 in der Spindel 1. Die Längsverschiebung wird in eine radiale Schwenkbewegung der Greifbacken 7 umgesetzt, nach deren Ablauf das Werkzeug manuell oder automatisch ausgebaut und gegen ein anderes ersetzt werden kann. Nach
dem Einsetzen des neuen Werkzeugs wird die Kolben-
Zylinder-Einheit 45 entlastet und die Spannzange 6
nimmt unter der Wirkung des Tellerfederpakets 30 die
Grundstellung nach Fig. 1 und 2a ein.

Die Erfindung ist nicht auf die dargestellte Ausführung beschränkt. So kann die Zange 40 auch bei
Spindeln anderer Konstruktion eingesetzt werden, solange bei diesen die Spannzange zum Freigeben und
Festziehen des Werkzeugs axial relativ-verschiebbar
in der Spindel angeordnet ist. Wesentlich ist, daß
durch den äußeren Angriff der Kräfte zur Überwindung
der Spannkräfte des Tellerfederpakets die Zufuhr von
Druckflüssigkeit in die Spindel vermieden wird und
die Spindel in die vorgegebene Wechselposition
orientiert und festgelegt werden kann, was u. a. durch
die hängende Gelenkanordnung der Zange 40 ermöglicht
wird.

0212388

A n s p r ü c h e
------------------

1. Vorrichtung zum Einspannen von Werkzeugen in der Spindel einer Werkzeugmaschine, bestehend aus einer zentral in der Spindel angeordneten Spannzange mit Greifbacken am vorderen Ende, aus einem in der Spindel angeordneten Federpaket und aus einem die Kraft des Federpakets überwindenden Mechanismus zum Öffnen der Spannzange,

   d a d u r c h   g e k e n n z e i c h n e t ,

   daß der Mechanismus (40) seitlich neben der Spindel (1) bewegbar angeordnet ist und außen an der Spannzange (6) und an der Spindel (1) angreift.

2. Vorrichtung nach Anspruch 1,
   dadurch gekennzeichnet,
   daß der Mechanismus als Zange (40) ausgebildet ist, die mit einem Betätigungshebel (41) im Spindelstock (3) schwenkbar angelenkt ist und an deren anderem Betätigungshebel (43) eine Kolben-Zylinder-Einheit (45) angreift.

3. Vorrichtung nach Anspruch 2,
   dadurch gekennzeichnet,

112-(x2317)-Sd-E

0212388

daß der eine Greifbügel (47) der Zange (40) an einem
Außenring (35) an der Spindel (1) und der andere Greifbügel (50) an einem Druckstück (34, 31) der Spannzange
(6) angreift.

4. Vorrichtung nach Anspruch 3,
   dadurch gekennzeichnet,
   daß das am zentralen Schaft (26) der Spannzange (6) befestigte Druckstück (31) drehfest und axial verschiebbar in der Spindel (1) geführt ist und einen Druckring
   (34) für den Angriff des Greifbügels (50) der Zange
   (40) aufweist.

5. Vorrichtung nach Anspruch 4,
   dadurch gekennzeichnet,
   daß der Druckring (34) mit dem Druckstück (31) durch
   einen Querbolzen (32) verbunden ist, welcher zwei in
   der Spindel (1) diametral gegenüberliegend angeordnete
   Langlöcher (33) durchragt.

6. Vorrichtung nach einem der Ansprüche 1 bis 5,
   dadurch gekennzeichnet,
   daß an der Spindel (1) eine Zentrierkerbe (49) vorgesehen ist, in die eine Nase (48) am Ende des zugehörigen Zangenbügels (47) eingreift.

7. Vorrichtung nach Anspruch 5 oder 6,
   dadurch gekennzeichnet,
   daß der an der Spindel (1) angreifende Zangenteil einen
   mittleren Steg (46) aufweist, an dessen freiem Ende der
   andere Zangenteil (43, 50) über ein Gelenk (51) angelenkt ist.

Fig.1

Fig.2a  Fig.2b  Fig.2c